# EUROPÄISCHE PATENTSCHRIFT

(11) **EP 1 812 323 B1**
(45) Veröffentlichungstag und Bekanntmachung des Hinweises auf die Patenterteilung: **30.06.2010**
(21) Anmeldenummer: 05802100.7
(22) Anmeldetag: 10.11.2005
(51) Int. Cl.: B65G 47/84, B29C 35/16

(54) **BEHÄLTERUMGREIFER**
CONTAINER-GRIPPING DEVICE
SYSTEME DE PRISE DE RECIPIENT

(30) Priorität: 15.11.2004 DE 102004055098
(43) Veröffentlichungstag der Anmeldung: 01.08.2007
(73) Patentinhaber: KRONES Aktiengesellschaft, 93073 Neutraubling (DE)
(72) Erfinder: HÖLLRIEGL, Thomas, 93158 Teublitz (DE); DÜNZINGER, Bernhard, 84069 Unterdeggenbach (DE); KNIELING, Erwin, 93102 Pfatter (DE); DEYERL, Heinrich, 92552 Teunz (DE)
(74) Vertreter: Grünecker, Kinkeldey, Stockmair & Schwanhäusser Anwaltssozietät
(86) Internationale Anmeldenummer: PCT/EP2005/012017
(87) Internationale Veröffentlichungsnummer: WO 2006/050935

(56) Entgegenhaltungen:
- DE-A1- 3 713 016
- GB-A- 1 301 335
- US-A- 2 928 705

## Beschreibung

Die Erfindung betrifft ein Verfahren zum Transportieren von einen Tragring oder dergleichen aufweisenden Behältern nach dem Oberbegriff von Anspruch 1 und eine Vorrichtung zum Transportieren von solchen Behältern nach dem Oberbegriff von Anspruch 11.

Im Bereich der Lebensmittelverpackungen erfreuen sich Flaschen aus PET (Polyethylenterephthalat) immer größerer Beliebtheit. Diese Behälter werden bei ihrer Herstellung aus Vorformlingen (Preform) hergestellt. Preforms durchlaufen während ihres Herstellungsprozesses verschiedene Behandlungsmaschinen, die jeweils verschiedene Prozesse an ihnen durchführen. Um sie optimal handhaben zu können, weisen sie einen Tragring auf, an dessen Ober- bzw. Unterseite sie während des Durchlaufs durch verschiedene Behandlungsmaschinen gehalten werden. Auch bei dem Transport zwischen den Behandlungsmaschinen werden die Vorformlinge über oder unter dem Tragring gehalten und übergeben. Es findet also oft ein im wesentlichen bodenfreier Transport der Vorformlinge durch die Behandlungsmaschinen und den zwischengeschalteten Transport- und Übergabeeinrichtungen statt. Werden Behälter übergeben, so können sie jeweils nur wechselweise oben und unten am Tragring ergriffen werden.

Die Schrift DE 37 13 016 A1 zeigt dabei so ein wechselweises Greifen von Kunststoffflaschen oben bzw. unten am Tragring. Die Flaschen werden während des gesamten Transports durch verschiedene Maschinen, Drehstationen und Übergabebereiche praktisch bodenfrei am Halskragen unterstützt bzw. geführt.

Ein Problem bei solchen Übergabeverfahren und Vorrichtungen ist es, dass zwischen zwei Behandlungsmaschinen, die beide unterhalb bzw. oberhalb des Tragrings angreifen Übergabeeinrichtungen wie z.B. Transfersterne verwendet werden müssen, da das mehrmalige Greifen des Behälters an der gleichen Stelle, also jeweils oberhalb oder jeweils unterhalb des Tragrings, nicht möglich ist.

Die GB 1301335 A beschreibt ein Verfahren zur Transportieren von Behältern nach dem Oberbegriff des Anspruchs 1 und eine Vorrichtung zum Transportieren von solchen Behältern nach dem Oberbegriff des Anspruchs 11. Die GB 1301335 A offenbart eine Vorrichtung zur Übergabe von Flaschenrohlingen von einer Glasblaseinheit zu einer Trenneinheit, in der ein oberer Bereich des Flaschenrohlings von dem eigentlichen Flaschenkörper abgetrennt wird. Die Flaschenrohlinge werden dabei zunächst von einem Glasband abgetrennt, dabei an dem oberen Bereich, unterhalb einer sich konisch nach oben aufweitenden Schulter jeweils durch eine gabelförmige Auflage und einen unter dieser angeordneten Greifer gehalten und weiter transportiert, und schließlich in einem geradlinigen Transportabschnitt der Vorrichtung an die Trenneinheit übergeben.

Es ist deshalb Aufgabe der vorliegenden Erfindung, ein Verfahren und eine Vorrichtung zu schaffen, das / die es ermöglicht, ein Umgreifen am Behälter ohne eine zusätzliche Transfereinrichtung auszuführen, die Handhabung von Behältern in Behandlungsmaschinen wesentlich zu vereinfachen und den Bauaufwand durch Verzicht von zusätzlichen Transfereinrichtungen erheblich zu verringern.

Erfindungsgemäß wird diese Aufgabe durch die Verfahrensmerkmale des Anspruchs 1 und durch die Vorrichtungsmerkmale des Anspruchs 11 gelöst.

Das Transportverfahren wird vorzugsweise mit flaschenähnlichen Behältern durchgeführt, die oberhalb des Tragrings einen Mündungsbereich und unterhalb des Tragrings einen Hals-, Rumpf- und Bodenbereich aufweisen. Es ist aber nicht ausgeschlossen, dass andere Behälter, wie zum Beispiel Beutel (sog. Pouches), die einen Tragring aufweisen, mit Hilfe dieses Verfahrens transportiert werden. Lediglich der Tragring ist für diese Transportverfahren obligatorisch.

Unter Tragring ist alles zu verstehen, was die Funktionen des Tragrings erfüllt. Es können also auch Behälter mit einem ist das vorhandensein eins Vorsprungs oder einer Ausnehmung, sodass der Behälter an diesem oder in dieser sicher gehalten und gegriffen werden kann.

Bei dem beschriebenen Transportverfahren durchlaufen die Behälter einen Übergabebereich, der sich vorzugsweise zumindest teilweise auf einer kreisförmigen Bahn befindet. Der Übergabebereich kann aber auch linear ausgebildet sein. In diesem Übergabebereich befinden sich mehrere Greifelemente, die wechselweise am Mündungs- und/oder am Hals-, Rumpf- oder Bodenbereich des Behälters angreifen. Die Greifelemente befinden sich vorzugsweise paarweise im Übergabebereich. In einer bevorzugten weiterbildung sind sie außerdem so übereinander angebracht, dass sie sich zumindest teilweise, vorzugsweise radial, überdecken. Dabei drehen sich die Greifelemente in einer bevorzugten Weiterbildung um eine gemeinsame Drehachse in zwei parallelen, übereinanderliegenden Ebenen. Die Greifelemente sind vorzugsweise als seitlich angreifende Zangen mit zwei gegenläufig schwenkbaren Hebelarmen ausgebildet.

In einer bevorzugten Ausführungsform ist eine Ebene mit Greifelementen als Transferrad ausgebildet, das um die gemeinsame Drehachse umläuft. Die Greifelemente sind jeweils an einem endlosen Förderer, wie z.B. einer Kette, befestigt.

Die Greifelemente zumindest einer Ebene sind vorzugsweise so ausgebildet, dass sie auch in radialer Richtung verschiebbar sind. Dadurch können Behälter, die sich in einer Behandlungsmaschine vor dem Übergabebereich befinden, durch das radiale Ausfahren eines Greifelementes in die Transporteinrichtung übernommen werden. Bei der radialen Bewegung in die zurückgezogene Position kann nun der Vorformling in das darunter liegende Greifelement eingeschoben werden.

Dabei ist es sowohl möglich, dass das Eine Greifelement den Behälter am Tragring oberhalb und das Andere Greifelement den Behälter am Tragring unterhalb des Tragrings erfasst, als auch, dass das eine Greifelement den Behälter oberhalb des Tragrings und das andere Greifelement den Behälter unter dem Tragring am Rumpf und / oder am Bodenbereich erfasst.

In einer bevorzugten Ausführungsform sind die radial bewegbaren Greifelemente aktiv steuerbar, um die aufzunehmenden Behälter aktiv zu greifen. Die in der anderen Ebene umlaufenden Behälter sind vorzugsweise passiv steuerbare Greifelemente.

Die Übergabe der Behälter in den Übergabebereich und das Umgreifen am Behälter von oben nach unten bzw. umgekehrt, findet vorzugsweise während der Bewegung der Greifelemente statt. Es ist aber auch denkbar, dass die Greifelemente bei der Übergabe der Behälter taktweise gesteuert werden.

Die radiale Bewegung der Greifelemente bezüglich der gemeinsamen Drehachse wird vorzugsweise durch Kurvensteuerungen vorgenommen. In einer anderen Ausführungsform ist die radiale Steuerung der Greifelemente durch pneumatische oder hydraulische Vorrichtungen ebenso denkbar. Dazu sind Führungen, vorzugsweise Gleitschienen, vorhanden, die die Greifelemente während ihrer radialen Bewegung führen.

Mit Hilfe der Transportvorrichtung werden vorzugsweise flaschenähnliche Behältern transportiert, die oberhalb des Tragrings einen Mündungsbereich und unterhalb des Tragrings einen Hals-, Rumpf- und Bodenbereich aufweisen. Es ist aber nicht ausgeschlossen, dass andere Behälter, wie zum Beispiel Beutel (sog. Pouches), die einen Tragring aufweisen, mit Hilfe dieser Vorrichtung transportiert werden.

Die Transportvorrichtung ist vorzugsweise so ausgebildet, dass die Greifelemente an einem endlosen Transportelement wie z.B. einer Transportkette befestigt sind. Besonders bevorzugt ist eine Ausführungsform, bei der die zumindest im Übergabebereich, dort vorzugsweise paarweise auftretenden und in axialer Richtung fluchtenden Greifelemente, in zwei Ebenen übereinander liegenden Transportelemente eine gleiche Teilung aufweisen. Ist eine gemeinsame Drehachse vorhanden, so laufen sie bei gleicher Teilung mit gleicher Geschwindigkeit um. Es ist aber auch eine Ausführungsform denkbar, bei der die Umlaufgeschwindigkeiten der Greifelemente um die Drehachse so gesteuert sind, dass sie nur im Übergabebereich übereinanderliegen und sich außerhalb des Übergabebereichs voneinander entfernen.

In einer bevorzugten Ausführungsform ist der Abstand der parallelen Ebenen, in denen die jeweiligen Greifelemente umlaufen, so bemessen, dass die Greifelemente ohne weitere Höhenbewegungen oberhalb bzw. unterhalb des Tragrings eingreifen können. Vorzugsweise sind zumindest die Greifelemente, die radial bewegbar sind, aktiv durch Nocken, Pneumatikzylinder oder Hydraulikzylinder steuerbar. Andere aktive Steuerungen sind denkbar und nicht ausgeschlossen. In einer weiteren Ausführungsform sind alle Greifelemente aktiv steuerbar. Sie sind zum Beispiel gemäß dem europäischen Patent EP 0939044B1 ausgebildet.

In einer bevorzugten Ausführungsform ist jeweils ein Greifelement eines dem Behälter zugeordneten Greifelementpaares aktiv und ein Greifelement passiv wie zum Beispiel durch eine Feder gesteuert, wobei vorzugsweise dasjenige aktiv steuerbar ist, das den Behälter von der vorherigen Behandlungsmaschine übernimmt.

Diejenigen Greifelemente, die die Behälter von der vorherigen Behandlungsmaschine übernehmen, laufen vorzugsweise in einer geschlossenen Kreisbahn um. In einer bevorzugten Ausführungsform sind sie als ein um die gemeinsame Drehachse umlaufender Transportstern ausgebildet. Die Greifelemente, in die die Behälter in den Übergabebereich übergeben werden, laufen vorzugsweise in einer länglichen Bahn mit zwei Drehachsen um.

Nur im Übergabebereich weisen die beiden umlaufenden Transportelemente einen gleichen Radius R auf.

vorzugsweise in den geraden Bereichen des länglichen Abschnitts befinden sich Behandlungseinheiten. Bei diesen kann es sich um Inspektionseinheiten zur Bodeninspektion, Seitenwandinspektion oder auch Mündungskontrolle, um Beschriftungseinheiten wie Laser oder Tintenstrahlbeschriftungseinheiten oder um Behälterkühleinheiten handeln. Es ist auch die Unterbringung von anderen, zusätzlichen Behandlungseinheiten denkbar.

Die Behälterkühleinheiten können verschiedene Ausgestaltungen haben. Eine Möglichkeit besteht darin, stationäre Düsen innerhalb der Behälterkühleinheit anzuordnen, die den Behälter von Unten, von der Seite oder von Oben mit Luft oder einem flüssigen Medium, wie zum Beispiel Wasser, besprühen. Findet eine Luftkühlung Verwendung, so wird gemäß einer bevorzugten Weiterbildung der Erfindung Recycling-Luft aus der Behandlungsmaschine verwendet.

Eine andere Möglichkeit der Behälterkühlung besteht darin, jedem Behälter zumindest in der Behälterkühleinheit ein Kühlelement zuzuordnen, das mit Teilen der Behälteraußenwand, vorzugsweise dem Bodenbereich, in Eingriffnahme gebracht werden kann. Die Behälterkühleinheiten bewegen sich dabei vorzugsweise gleichförmig mit dem Behälter mit.

Eine solche Behälterkühleinheit kann zum Beispiel eine Bodentasse sein, die im wesentlichen die Kontur des Behälters aufweist. Vorzugsweise ist die Bodentasse mit Kühlkanälen durchzogen, durch die ein Kühlmedium fließen kann, durch das bei Ineingriffnahme der Bodentasse mit dem Behälter Wärme abgeführt wird.

Die Bodentasse kann zusätzlich noch mit Vakuum beaufschlagt werden, sodass der Behälter fest an die Bodentasse gesaugt wird, um einerseits eine verbesserte Ineingriffnahme und damit auch Kühlung zu bewerkstelligen und um andererseits den Behälter in der Bodentasse zu halten, ohne ihn am Halskragen ergreifen zu müssen. Dadurch werden - zeitlich begrenzt - Behandlungsvorgänge im Bereich der Behältermündung möglich, bei denen die Greifelemente am Behälterhalsbereich stören.

Eine weitere Möglichkeit der Behälterkühlung besteht darin, dass ein Kühlmedium in die Bodentasse eingebracht und anschießend der Behälter mit dem Boden in die Bodentasse getaucht wird. Ein solches Kühlmedium kann zum Beispiel Wasser oder Stickstoff sein.

Der Vorteil der Unterbringung von Behandlungseinheiten in dem länglichen Bereich ist der, dass sich die Behälter in einem festen Teilungsverhältnis befinden, weshalb bestimmte Vorgänge besser bzw. überhaupt erst durchgeführt werden können.

Nach einer bevorzugten Ausführungsform sind die Behandlungseinheiten so aufgebaut, dass sie modulartig entfernt oder hinzugefügt werden können. Es kann also auch nur eine der genannten Behandlungseinheiten im länglichen Bereich untergebracht sein. Das endlos umlaufende Transportelement muss dann entsprechend verkürzt oder verlängert werden.

Nachstehend werden Ausführungsbeispiele der Erfindung anhand der Zeichnungen näher beschrieben. Dabei zeigt:
- Figur 1: eine Draufsicht auf eine erste Ausführungsform einer Vorrichtung,
- Figur 2: eine Draufsicht auf eine zweite Ausführungsform,
- Figur 3: eine vergrößerte Draufsicht auf die Übergabeeinrichtung der Ausführungsformen der Figuren 1 und 2,
- Figur 4: eine Seitenansicht aus Richtung X in Fig. 2 betrachtet auf einen Teil der Übergabeeinrichtung und der Behandlungsmaschine nach einer erfindungsgemäßen Vorrichtung und
- Figur 5: eine Seitenansicht einer Behälterkühlanlage

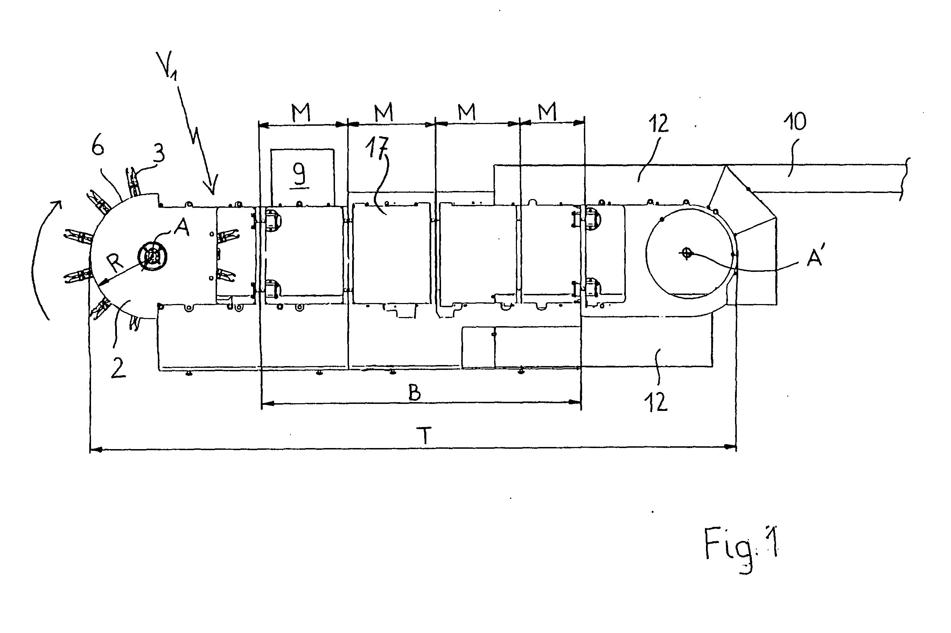

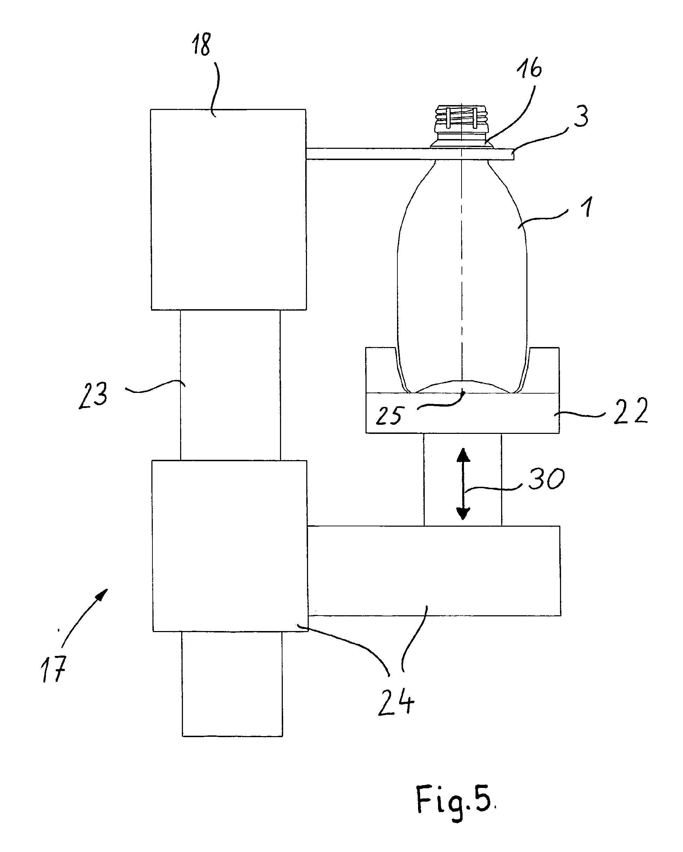

Figur 1 zeigt bei Vorrichtung V1 den Übergabebereich 2, der sich am linken Ende der Transportstrecke T befindet. In dem Übergabebereich 2 läuft um die gemeinsame Drehachse A ein endloses, hier nicht gezeigtes Transportelement um, an dem Greifelemente 3 befestigt sind. Der Umlauf des endlosen Transportelements und damit auch der Greifelemente 3 um die gemeinsame Drehachse A erfolgt im Abstand R von der gemeinsamen Drehachse A entlang eines kreisförmigen Elements 6. Den hier dargestellten Greifelementen 3 zugeordnete, auf einer parallelen Ebene liegende weitere Greifelemente 3" sind der Übersichtlichkeit halber nicht gezeigt. Sie sind an einem Zugmittel, wie beispielsweise einer Kette, einem Riemen oder dergleichen befestigt und ragen in Transportrichtung gesehen seitlich aus diesen. Diese Greifelemente 3" laufen aber nicht wie die hier dargestellten Greifelemente 3 komplett um die gemeinsame Drehachse A um, sondern sie tauchen nach dem Durchlaufen des halbkreisförmigen Elements 6 in eine geradlinige Bewegungsbahn entlang des Abschnitts B ein. Dort durchlaufen sie nacheinander die verschiedenen Module M, an denen verschiedene Behandlungseinheiten 8, 9, 11, 17 angebracht sein können. Hier gezeigt ist eine Seitenwandinspektionsmaschine 9, die in Laufrichtung gesehen seitlich am ersten Modul M angebracht ist und eine Behälterkühlarilage 17, die in Figur 5 näher gezeigt ist.

Die Seitenwandinspektionsmaschine besteht vorzugsweise aus einem Beleuchtungskörper mit gegenüberliegendem Schirm (beide nicht dargestellt), die Beschädigungen bzw. ungewollte Veränderungen am Preform oder an der fertig geblasenen Flasche feststellen. Der Beleuchtungskörper und der Schirm sind dabei in Transportrichtung gesehen senkrecht links und rechts neben der Transportstrecke T angeordnet.

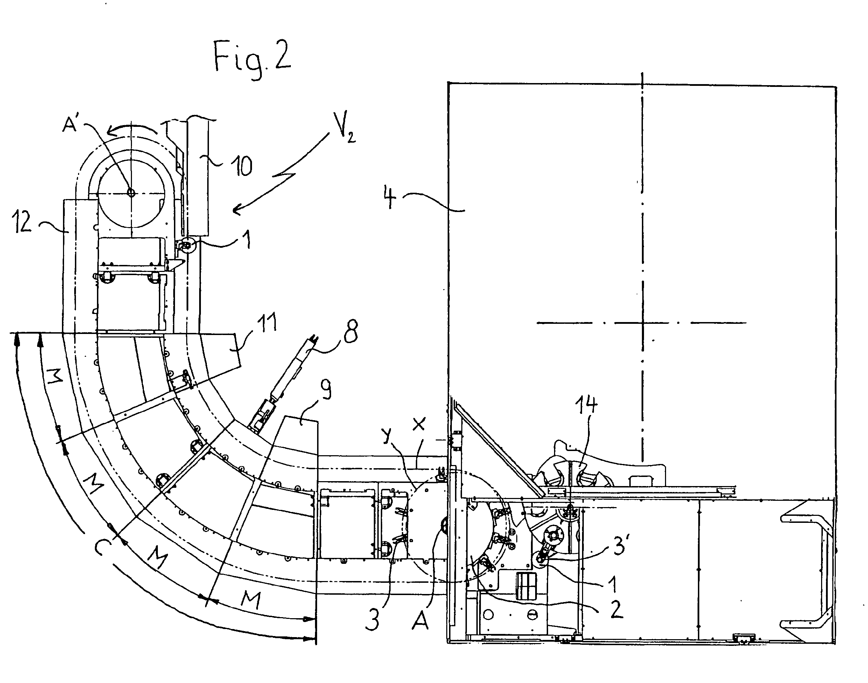

Obwohl hier nur eine Behandlungseinheit 9 vorhanden ist, wird der Bereich B von insgesamt vier Modulen gebildet. Dadurch kann zwischen einer Behandlungsmaschine 4 (Fig. 2) und dem Behälterabförderer 10 eine Pufferstrecke erzeugt werden.

Nach dem Durchlaufen der Module M entlang des Abschnitts B werden die Behälter an einen Behälterabförderer 10 übergeben. In diesem Fall ist dies ein Luftförderer. Während die Behälter 1 zur nächsten Behandlungsmaschine weitertransportiert werden, laufen die nun leeren Greifelemente 3" um die Achse A' um und entlang der Transportstrecke T zurück zum Übergabebereich 2, wo sie von neuem Behälter 1 aus der vorhergehenden Behandlungsmaschine 4 entgegennehmen. Zumindest einige Teile der Transportstrecke T sind mit einem Transportelementschutz 12 umgeben, damit die Verletzungsgefahr für das Bedienpersonal ausgeschlossen ist.

Figur 2 zeigt mit V2 eine andere Ausführungsform der erfindungsgemäßen Vorrichtung. Hier ist auch die der Transportvorrichtung vorgeschaltete Behandlungsmaschine 4 gezeigt. Es handelt sich dabei um eine Streckblasmaschine 4, die PET-Preforms zu PET-Flaschen aufbläst. Die in der Behandlungsmaschine 4 fertig geblasenen Behälter 1 werden von einem Transferstern 14 aus hier nicht gezeigten Blasformen übernommen. Da die in der Behandlungsmaschine 4 hergestellten Flaschen mit der Unterseite des Tragrings 16 an einer Oberseite der Blasformen anliegen, können sie von den Greifelementen 3' des Transfersterns 14 nur oberhalb des Tragrings 16 erfasst werden. So gehalten werden sie in Richtung des Übergabebereichs 2 im Uhrzeigersinn transportiert. Die Greifelemente 3' des Transfersterns 14 sind im Übergabebereich 2 mit den Greifelementen 3 stellungsgerecht synchronisiert, so dass eine Übergabe der Behälter 1 stattfinden kann.

Im Übergabebereich 2 sind Greifelemente 3 und 3" paarweise in zwei übereinander versetzten Umlaufebenen Uu und Uo angeordnet, wobei die sich in der unteren Umlaufebene Uu befindlichen Greifelemente 3 entlang einer Bahn Y um die gemeinsame Drehachse A auf einer Kreisbahn verfahren werden und die sich in der oberen Umlaufebene Uo befindlichen Greifelemente 3" entlang einer Bahn X. Die Bahn Y hat im Wesentlichen die Form einer Kreisbahn, während Bahn X im Wesentlichen die Form eines L hat, also einen 90° Winkel ausprägt. Im Übergabebereich 2 wird nun der Behälter 1, der im Transferstern 14 vom Greifelement 3' oberhalb des Tragrings 16 erfasst wird, an das untere Greifelement 3 übergeben, das entlang der Bahn Y verfahren wird. Damit sich die übereinanderliegenden Greifelemente 3 und 3" im Übergabebereich 2 bei der Übernahme der Behälter nicht gegenseitig stören, ist das untere Greifelement 3 radial nach außen in Richtung zum Transferstern 14 verschiebbar. Die Übernahme des Behälters 1 vom gegenüberliegenden Greifelement 3' wird in dieser expositionierten Lage unter dem Tragring 16 vorgenommen. Während der Drehung der Greifelemente 3 um die gemeinsame Drehachse A im Uhrzeigersinn wird das sich unten befindliche, nun den Behälter haltende Greifelement 3 von seiner expositionierten Lage nun in entgegengesetzter Richtung radial zurückgezogen. Dieses Zurückziehen bewirkt, dass der Behälter 1 oberhalb des Tragrings 16 von dem oberen sich entlang der Bahn X bewegenden Greifelement 3" übernommen wird. Zu diesem Übernahmezeitpunkt befindet sich sowohl oberhalb als auch unterhalb des Tragrings 16 des Behälters 1 ein Greifelement 3 bzw. 3". Sobald der Behälter 1 sicher von dem sich oben befindlichen Greifelement 3" gehalten wird, wird das untere Greifelement 3 aktiv geöffnet. Somit kann sich der Behälter 1 entlang der Bahn X weiter durch die Transportvorrichtung bewegen.

Zwischen dem Übergabebereich 2 und dem Behälterabförderer 10 befinden sich wiederum vier Module M, die den Abschnitt C ausbilden. Die Module M sind dabei so angeordnet, dass die Behälter 1 während des Transports entlang der Bahn X eine im Gegensatz zur Abförderrichtung aus der Behandlungsmaschine 4 um 90° verschobene Transportrichtung aufweisen. Der Abschnitt C bildet also einen Winkel von 90° aus.

Während des Transports entlang der Bahn X durchlaufen die Behälter 1 die Module M an denen eine Seitenwandinspektionsmaschine 9, eine Laserbeschriftungseinheit 8 und eine Mündungsinspektionsmaschine 11 befestigt sind. Im Bereich des Behälterabförderers 10, der hier durch einen Luftförderer gebildet wird, löst sich das Greifelement 3" vom Tragring 16 des Behälters 1, um diesen für den Abtransport freizugeben.

Danach laufen die sich auf der Bahn X bewegenden Greifelemente 3" halbkreisförmig um die zweite Drehachse der Transportvorrichtung A' um. Im Rücklaufbereich zum Übergabebereich 2 sind die Greifelemente 3" komplett von einem Transportelementschutz 12 umgeben.

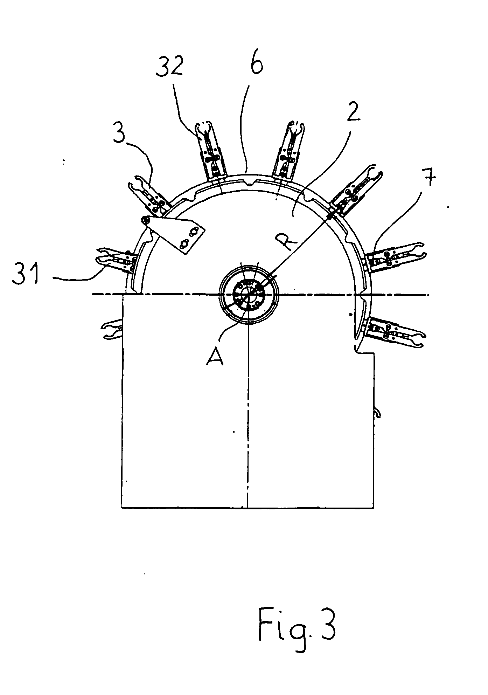

Figur 3 zeigt die sich im Übergabebereich 2 unten befindlichen und entlang der Bahn Y aus Figur 2 beweglichen Greifelemente 3. Die sich oben befindlichen und entlang der Bahn X bewegenden Greifelemente 3" sind der Übersichtlichkeit halber nicht gezeichnet.

Bei den sich in Bezugnahme auf die gemeinsame Drehachse A radial verschiebbaren Greifelementen 3 handelt es sich um aktiv steuerbare Greifelemente 3, die durch das Betätigen eines Nockens 7 über an der Umlaufbahn angeordnete Betätigungseinrichtungen geöffnet bzw. geschlossen werden können.

Die radiale Verschiebbarkeit der Greifelemente 3 in Bezugnahme auf die gemeinsame Drehachse A lässt sich an den Positionen der Greifelemente 31 und 32 gut erkennen. In Bezugnahme auf die gemeinsame Drehachse A hat das Greifelement 31 eine radial weiter innen liegende Position als das Greifelement 32.

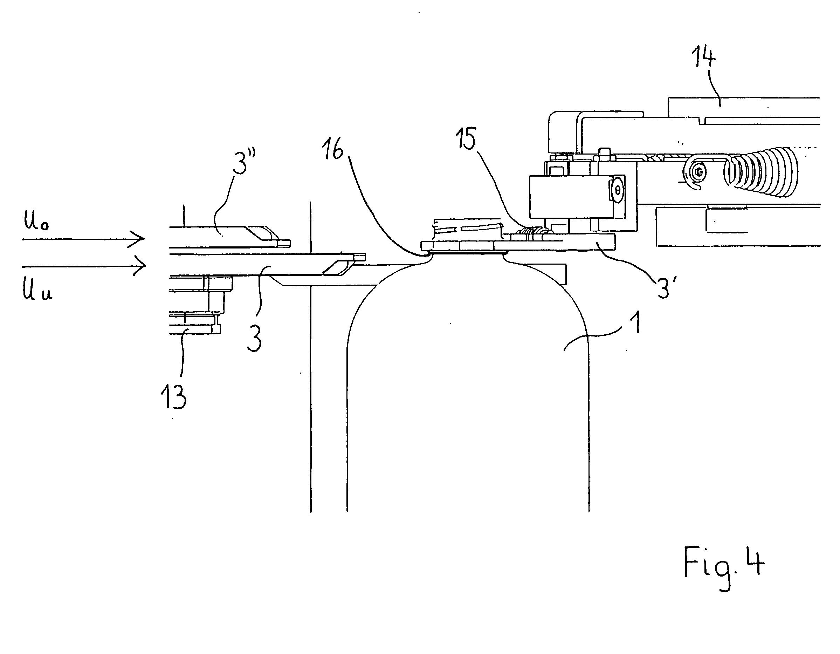

Figur 4 zeigt die Übergabe des Behälters 1 von dem Greifelement 3' des Transfersterns 14 an die Greifelemente 3 und 3" des Übergabebereichs 2. Der Behälter 1 wird von dem passiv durch eine Feder 15 gesteuerten Greifelement 3' oberhalb des Tragrings 16 gehalten. Um den Behälter 1 zu übernehmen, verfährt das untere Greifelement 3, das sich in der Ebene Uu befindet, entlang der radial ausgerichteten Schiene 13 in eine expositionierte, weiter außen liegende Position. Von dort aus greift es den Behälter 1 aktiv gesteuert unter dem Tragring 16. Anschließend wird das untere Greifelement 3 entlang der Schiene 13 von seiner expositionierten Position in Gegenrichtung zurückgezogen, wodurch es den Behälter 1 aus dem Greifelement 3' zieht. Das Greifelement 3' wird durch eine Feder 15 passiv beaufschlagt, d.h. es ist nicht aktiv gesteuert. Die Bewegung der Greifelemente 3 entlang der Schiene 13 wird durch nicht dargestellte Steuerkurven vorgegeben.

Durch das Zurücknehmen der expositionierten Lage des unteren Greifelements 3 entlang der Schiene 13 wird der Behälter 1 zwischen die Greifarme des oberen, sich in der Ebene Uo befindlichen, ebenfalls mit Feder beaufschlagten Greifelements 3" gezogen. Jetzt kann das untere Greifelement 3 den Behälter 1 gesteuert freigeben, wodurch er sich mit dem oberen Greifelement 3" (wie in Figur 2 gezeigt) entlang der Bahn X in Richtung zum Behälterabförderer 10 bewegt.

Figur 5 zeigt eine Behälterkühlanlage 17 wie sie in Figur 1 als Modul M in der Transportstrecke T angebracht ist. Der Behälter 1 wird von einem Greifelement 3 unter dem Tragring 16 gehalten. Das Greifelement 3 ist an einem Transportelement 18 befestigt, das seinerseits an einer Welle 23 angebracht ist. An der Welle 23 ist ein entlang der Richtung 30 vertikal verfahrbarer Halter 24 befestigt, der eine Bodentasse 22 aufnimmt. Die Bodentasse 22 ist ein der Bodenform des Behälters 1 ungefähr angepasstes Element, das durch die vertikale Verfahrbarkeit in Richtung 30 mit dem Boden des Behälters 1 in Eingriff und außer Eingriff gebracht werden kann. Durch die Ineingriffnahme entsteht eine mehr oder weniger ausgeprägte Kontaktberührung der Bodentasse 22 mit dem Boden des Behälters 1, sodass eine Kühlung desselben vollzogen wird. Je besser die Kontur der Bodentasse 22 der Kontur des Behälterbodens angepasst ist, desto besser ist die Kühlung. Die Bodentasse 22 kann auch zwangsgekühlt sein (z.B. durch Kühlmediendurchflossene Kühlkanäle). Eine weiter Möglichkeit der Kühlung des Behälterbodens besteht darin, dass vor der Ineingriffnahme der Bodentasse 22 mit dem Behälterboden in die Mitte 25 der Bodentasse 22 ein Kühlmedium - wie zum Beispiel Stickstoff - eingeträufelt wird, das verdampft und bei der Kontaktberührung des Behälters 1 mit der Bodentasse 22 den Behälterboden kühlt.

Zudem ist ein Befüllen der Bodentasse 22 mit einem flüssigen Kühlmedium denkbar, sodass zumindest der Behälterboden zum Zwecke der Kühlung in die Flüssigkeit eingetaucht werden kann. Das Kühlmedium ist vorzugsweise Wasser. Bei dieser Weiterbildung der Erfindung ist es zweckmäßig, wenn die Bodentasse 22 mit einem Kühlmedienspeicher verbunden ist, damit der Flüssigkeitsspiegel auf nahezu konstantem Niveau gehalten werden kann.

## Patentansprüche

1. Verfahren zum Transportieren von einen Tragring (16) oder dergleichen aufweisenden Behältern (1), wobei die zu transportierenden Behälter (1) mindestens einen Übergabebereich (2) durchlaufen, in dem sie von Greifelementen (3, 3', 3") wechselweise an verschiedenen Seiten des Tragrings (16) gehalten werden, und die Greifelemente (3, 3', 3") zumindest im Übergabebereich (2) eine gleichsinnige Bewegungsrichtung aufweisen,
**dadurch gekennzeichnet, dass**
die Greifelemente (3,3',3") im Bereich eines kreisförmigen Elements (6) in radialer Richtung zu einer gemeinsamen Drehachse (A) bewegt werden.

2. Verfahren nach Anspruch 1, **dadurch gekennzeichnet, dass** die Greifelemente (3, 3', 3") zumindest im Übergabebereich (2) um die gemeinsame Drehachse (A) und in zwei parallelen, übereinanderliegenden Ebenen (Uu, Uo) so umlaufen, dass sie sich in radialer Richtung zumindest teilweise überdecken.

3. Verfahren nach Anspruch 1 und / oder 2, **dadurch gekennzeichnet, dass** die Behälter (1) vor der Überführung in den Übergabebereich (2) mindestens eine Behandlungsmaschine (4), vorzugsweise eine Rotationsstreckblasmaschine oder einen Füller durchlaufen.

4. Verfahren nach wenigstens einem der vorangegangenen Ansprüche, **dadurch gekennzeichnet, dass** im Übergabebereich (2) jedem Behälter (1) ein Greifelementpaar (3, 3") zugeordnet ist.

5. Verfahren nach Anspruch 4, **dadurch gekennzeichnet, dass** die Behälter (1) bei der Übergabe in den Übergabebereich (2) jeweils von dem oberen bzw. dem unteren Greifelement des Greifelementpaares (3, 3") aufgenommen werden, je nach dem ob die Behälter (1) vor der Übergabe in den Übergabebereich (2) unterhalb oder oberhalb des Tragringes (16) gehalten werden und dass das andere Greifelement (3, 3") des Greifelementpaares (3, 3") zum Zeitpunkt der Übergabe in den Übergabebereich (2) eine in Richtung der gemeinsamen Drehachse (A) radial innenliegende Position einnimmt.

6. Verfahren nach wenigstens einem der vorangegangenen Ansprüche, **dadurch gekennzeichnet, dass** nachdem die Behälter (1) in den Übergabebereich (2) übergeben werden, das zurückgezogene Greifelement (3, 3") eine radiale Bewegung in Richtung des zugeordneten Behälters (1) vornimmt, und diesen somit am Mündungs- bzw. am Halsbereich greift.

7. Verfahren nach wenigstens einem der vorangegangenen Ansprüche, **dadurch gekennzeichnet, dass** das Greifelement (3, 3"), das den zugeordneten Behälter bei der Übergabe des Behälters (1) in den Übergabebereich (2) aufnimmt, eine radiale Bewegung in Richtung der gemeinsamen Drehachse (A) vornimmt und den Behälter (1) somit frei gibt, sodass er nur noch von einem Greifelement (3, 3") gehalten wird.

8. Verfahren nach wenigstens einem der vorangegangenen Ansprüche, **dadurch gekennzeichnet, dass** der beschriebene Bewegungsablauf während des Transports der Behälter (1) durch den Übergabebereich (2) erfolgt.

9. Verfahren nach wenigstens einem der vorangegangenen Ansprüche, **dadurch gekennzeichnet, dass** die Bewegungen der Greifelemente (3, 3', 3") durch Kurvenscheiben(5) gesteuert werden.

10. Verfahren nach wenigstens einem der Ansprüche 1 bis 9, **dadurch gekennzeichnet, dass** das eine Greifelement (3") den Behälter (1) direkt oberhalb oder unterhalb am Tragring (16) ergreift, während das andere Greifelement (3) den Behälter (1) am Rumpf oder am Boden ergreift.

11. Vorrichtung zum Transportieren von einen Tragring (16) oder dergleichen aufweisenden Behältern (1) mit diesen zugeordneten, an endlos umlaufenden Transportelementen (18) befestigten Greifelementen (3,3',3"), wobei die Greifelemente (3,3") wenigstens abschnittsweise paarweise in parallelen Ebenen (Uu, Uo) um eine gemeinsame Drehachse (A) bewegbar sind,
**dadurch gekennzeichnet, dass**
die Greifelemente (3,3',3") im Bereich eines kreisförmigen Elements (6) in radialer Richtung zur gemeinsamen Drehachse (A) bewegbar sind;
die Greifelemente (3, 3") eines Paares zumindest im Bereich des kreisförmigen Elements (6) in zwei parallelen Ebenen (Uu, Uo) so übereinander liegen, dass sie sich zumindest teilweise überdecken oder fluchten; und
der axiale Abstand zwischen übereinanderliegenden Greifelementen (3, 3") so bemessen ist, dass die Greifelemente (3, 3") oberhalb und unterhalb des Tragrings (16) angreifen können.

12. Vorrichtung nach Anspruch 11, **dadurch gekennzeichnet, dass** die radiale Bewegung der Greifelemente (3, 3', 3") durch eine Steuerung mittels Kurvenscheiben (5) erfolgt.

13. Vorrichtung nach Anspruch 11 oder 12, **dadurch gekennzeichnet, dass** die Greifelemente (3, 3', 3") aktiv steuerbar sind, vorzugsweise durch Nocken (7) oder steuerbare Stellglieder wie Pneumatikzylinder.

14. Vorrichtung nach wenigstens einem der Ansprüche 11 bis 13, **dadurch gekennzeichnet, dass** die Greifelemente (3, 3', 3") passiv betätigbar ausgebildet sind, vorzugsweise durch Federkraft.

15. Vorrichtung nach wenigstens einem der Ansprüche 11 bis 14, **dadurch gekennzeichnet, dass** jeweils ein Greifelement (3, 3', 3") eines Greifelementpaares (3, 3") passiv und ein Greifelement (3, 3") aktiv steuerbar ist.

16. Vorrichtung nach wenigstens einem der vorangegangenen Ansprüche 11 bis 15, **dadurch gekennzeichnet, dass** ein endloses Transportelement auf einer Kreisbahn mit einem Radius (R) bewegbar ist, während ein weiteres endloses Transportelement (18) auch auf geraden Abschnitten (B) bewegbar ist und seine Bahn nur bei der Drehung um eine gemeinsame Drehachse (A) abschnittsweise den gleichen Radius (R) aufweist.

17. Vorrichtung nach Anspruch 16, **dadurch gekennzeichnet, dass** sich an/in den Abschnitten (B,C) der Bahn Behandlungseinheiten (8, 9, 11) befinden.

18. Vorrichtung nach Anspruch 17, **dadurch gekennzeichnet, dass** es sich bei den Behandlungseinheiten (8, 9, 11) um Inspektionsmaschinen zur Boden-, Seitenwand- (9) und Mündungskontrolle (11), Laserbeschriftungseinheiten (8) oder Behälterkühlanlagen (17) handelt.

19. Vorrichtung nach Anspruch 17 oder 18, **dadurch gekennzeichnet, dass** die Behandlungseinheiten (8, 9, 11) modular aufgebaut sind und die Transportstrecke (T) durch Ein- oder Ausbau von Modulen (M) mit Behandlungseinheiten (8, 9, 11) verlängert oder verkürzt werden kann.

20. Vorrichtung zum Transportieren von einen Tragring (16) oder dergleichen aufweisenden Behältern (1) mit diesen zugeordneten, an endlos umlaufenden Transportelementen (18) befestigten Greifelementen (3,3',3") nach Anspruch 18 oder 19, **dadurch gekennzeichnet, dass** es sich bei der Behälterkühlanlage (17) um eine Bodenkühleinheit handelt.

21. Vorrichtung nach Anspruch 20, **dadurch gekennzeichnet, dass** die Bodenkühleinheit mit Luft betreibbar ist.

22. Vorrichtung nach Anspruch 20 oder 21, **dadurch gekennzeichnet, dass** die Bodenkühleinheit mit der Behandlungsmaschine (4) verbunden ist, sodass sie mit Recyclingluft aus der Behandlungsmaschine (4) betreibbar ist.

23. Vorrichtung nach wenigstens einem der Ansprüche 20 bis 22, **dadurch gekennzeichnet, dass** jedem Behälter (1) zumindest in der Behälterkühlanlage (17) mindestens ein Kühlelement (21) zugeordnet ist, das mit dem Boden des Behälters (1) zumindest teilweise in Eingriffnahme bzw. außer Eingriffnahme bringbar ist.

24. Vorrichtung nach Anspruch 23, **dadurch gekennzeichnet, dass** das Kühlelement (21) eine mit einem Kühlmedium durchflossene Bodentasse (22) umfasst, die in etwa eine Form gemäß der Kontur des Bodens des Behälters (1) aufweist.

25. Vorrichtung nach Anspruch 24, **dadurch gekennzeichnet, dass** die Bodentasse (22) mit Vakuum beaufschlagbar ist.

26. Vorrichtung nach wenigstens einem der Ansprüche 23 bis 25, **dadurch gekennzeichnet, dass** das Kühlelement (21) mit Stickstoff beaufschlagbar ist.

27. Vorrichtung nach wenigstens einem der Ansprüche 23 bis 26, **dadurch gekennzeichnet, dass** das Kühlelement (21) derart ausgeprägt ist, dass es mit einem flüssigen Kühlmedium beaufschlagbar ist und zumindest der Boden des Behälters (1) in das Kühlmedium eintauchbar ist.

28. Verwendung einer Vorrichtung nach wenigstens einem der Ansprüche 11 bis 27 in einer Anlage zum Herstellen und / oder Befüllen und / oder Etikettieren und / oder Verschließen von Behältern (1).

## Claims

1. Method for transporting containers (1) having a support ring (16) or the like, wherein the containers (1) to be transported pass through at least one transfer region (2), in which they are held by gripping elements (3, 3', 3") alternately on different sides of the support ring (16), and the gripping elements (3, 3', 3") move in the same direction at least in the transfer region (2),
**characterized in that**
in the region of a circular element (6), the gripping elements (3, 3', 3") are moved in a radial direction with respect to a common rotational axis (A).

2. Method according to Claim 1, **characterized in that**, at least in the transfer region (2), the gripping elements (3, 3', 3") run about the common rotational axis (A) and on two parallel levels (Uu, Uo) located one above the other, such that they at least partially overlap in the radial direction.

3. Method according to Claim 1 and/or 2, **characterized in that**, before being transferred into the transfer region (2), the containers (1) pass through at least one treatment machine (4), preferably a rotary stretch blow moulding machine or a filler.

4. Method according to at least one of the preceding claims, **characterized in that** a pair of gripping elements (3, 3") is assigned to each container (1) in the transfer region (2).

5. Method according to Claim 4, **characterized in that**, during transfer into the transfer region, the containers (1) are received respectively by the upper or the lower gripping element of the pair of gripping elements (3, 3"), depending on whether the containers (1) were held below or above the support ring (16) before being transferred into the transfer region (2), and **in that** the other gripping element (3, 3") of the pair of gripping elements (3, 3") assumes a radially inner position in the direction of the common rotational axis (A) at the time of the transfer into the transfer region (2).

6. Method according to at least one of the preceding claims, **characterized in that**, after the containers (1) have been transferred into the transfer region (2), the retracted gripping element (3, 3") performs a radial movement in the direction of the assigned container (1) and thus grips the latter in the mouth or neck region.

7. Method according to at least one of the preceding claims, **characterized in that** the gripping element (3, 3") that receives the assigned container when the container (1) is transferred into the transfer region (2) performs a radial movement in the direction of the common rotational axis (A) and thus releases the container (1), so that the latter is held by just one gripping element (3, 3").

8. Method according to at least one of the preceding claims, **characterized in that** the described movement sequence takes place during the transport of the containers (1) through the transfer region (2).

9. Method according to at least one of the preceding claims, **characterized in that** the movements of the gripping elements (3, 3', 3") are controlled by cam plates (5).

10. Method according to at least one of Claims 1 to 9, **characterized in that** one gripping element (3") grasps the container (1) directly above or below the support ring (16) while the other gripping element (3) grasps the body or the base of the container (1).

11. Apparatus for transporting containers (1) having a support ring (16) or the like with gripping elements (3, 3', 3") assigned to said containers and fastened to endlessly circulating transport elements (18), wherein the gripping elements (3, 3") can, at least in sections, be moved in pairs on parallel levels (Uu, Uo) about a common rotational axis (A),
**characterized in that**
in the region of a circular element (6), the gripping elements (3, 3', 3") can be moved in a radial direction with respect to the common rotational axis (A);
the gripping elements (3, 3") of one pair are located one above the other on two parallel levels (Uu, Uo), at least in the region of the circular element (6), such that they at least partially overlap or are at least partially aligned; and
the axial spacing between gripping elements (3, 3") located one above the other is dimensioned such that the gripping elements (3, 3") can engage above and below the support ring (16).

12. Apparatus according to Claim 11, **characterized in that** the radial movement of the gripping elements (3, 3', 3") takes place in a manner controlled by means of cam plates (5).

13. Apparatus according to Claim 11 or 12, **characterized in that** the gripping elements (3, 3', 3") can be actively controlled, preferably by cams (7) or controllable actuators such as pneumatic cylinders.

14. Apparatus according to at least one of Claims 11 to 13, **characterized in that** the gripping elements (3, 3', 3") are designed to be passively actuable, preferably by spring force.

15. Apparatus according to at least one of Claims 11 to 14, **characterized in that** in each case one gripping element (3, 3', 3") of a pair of gripping elements (3, 3") can be passively controlled and one gripping element (3, 3") can be actively controlled.

16. Apparatus according to at least one of the preceding Claims 11 to 15, **characterized in that** an endless transport element can be moved on a circular path having a radius (R), while a further endless transport element (18) can also be moved on straight sections (B) and its path only has the same radius (R) in sections when rotation about a common rotational axis (A) takes place.

17. Apparatus according to Claim 16, **characterized in that** treatment units (8, 9, 11) are located at/in the sections (B, C) of the path.

18. Apparatus according to Claim 17, **characterized in that** the treatment units (8, 9, 11) are inspection machines for monitoring the base and side wall (9) and for monitoring the mouth (11), laser marking units (8) or container cooling systems (17).

19. Apparatus according to Claim 17 or 18, **characterized in that** the treatment units (8, 9, 11) are of modular construction and the transporting section (T) can be lengthened or shortened by installing or removing modules (M) with treatment units (8, 9, 11) .

20. Apparatus for transporting containers (1) having a support ring (16) or the like with gripping elements (3, 3', 3") assigned to said containers and fastened to endlessly circulating transport elements (18), according to Claim 18 or 19, **characterized in that** the container cooling system (17) is a base cooling unit.

21. Apparatus according to Claim 20, **characterized in that** the base cooling unit can be operated with air.

22. Apparatus according to Claim 20 or 21, **characterized in that** the base cooling unit is connected to the treatment machine (4), so that it can be operated with recycled air from the treatment machine (4).

23. Apparatus according to at least one of Claims 20 to 22, **characterized in that**, at least in the container cooling system (17), each container (1) is assigned at least one cooling element (21) which can at least partially be brought into engagement or out of engagement with the base of the container (1).

24. Apparatus according to Claim 23, **characterized in that** the cooling element (21) comprises a base cup (22) through which cooling medium flows and which has a shape approximately matching the contour of the base of the container (1).

25. Apparatus according to Claim 24, **characterized in that** the base cup (22) can have a vacuum applied to it.

26. Apparatus according to at least one of Claims 23 to 25, **characterized in that** the cooling element (21) can have nitrogen applied to it.

27. Apparatus according to at least one of Claims 23 to 26, **characterized in that** the cooling element (21) is designed such that it can have a liquid cooling medium applied to it and at least the base of the container (1) can be dipped into the cooling medium.

28. Use of an apparatus according to at least one of Claims 11 to 27 in a plant for producing and/or filling and/or labelling and/or closing containers (1).

## Revendications

1. Procédé pour transporter des récipients (1) présentant un collier de support (16) ou un élément similaire, les récipients à transporter (1) traversant au moins une zone de transfert (2) dans laquelle ils sont tenus par des éléments de préhension (3, 3', 3") sur différents côtés du collier (16) alternativement, et les éléments de préhension (3, 3', 3") présentent au moins dans la zone de transfert (2) un même sens de déplacement,
**caractérisé en ce que** les éléments de préhension (3, 3', 3") sont déplacés, dans la zone d'un élément circulaire (6), dans un sens radial par rapport à un axe de rotation commun (A).

2. Procédé selon la revendication 1, **caractérisé en ce que** les éléments de préhension (3, 3', 3"), au moins dans la zone de transfert (2), tournent sur l'axe de rotation commun (A) et dans deux plans superposés parallèles (Uu, Uo) de telle sorte qu'ils se recouvrent au moins partiellement, dans le sens radial.

3. Procédé selon la revendication 1 et/ou 2, **caractérisé en ce que** les récipients (1), avant d'être amenés dans la zone de transfert (2), traversent au moins une machine de traitement (4), de préférence une machine d'étirage-gonflage à rotation ou un dispositif de remplissage.

4. Procédé selon l'une au moins des revendications précédentes, **caractérisé en ce que** dans la zone de transfert (2), une paire d'éléments de préhension (3, 3") est associée à chaque récipient (1).

5. Procédé selon la revendication 4, **caractérisé en ce que** les récipients (1), quand ils sont amenés dans la zone de transfert (2), sont pris chacun par l'élément de préhension supérieur ou inférieur de la paire d'éléments de préhension (3, 3"), suivant que lesdits récipients (1) sont tenus au-dessous ou au-dessus du collier de support (16), avant d'être amenés dans la zone de transfert (2), et **en ce que** l'autre élément de préhension (3, 3") de ladite paire (3, 3") prend, au moment de l'amenée dans la zone de transfert (2), une position radialement intérieure dans le sens de l'axe de rotation commun (A).

6. Procédé selon l'une au moins des revendications précédentes, **caractérisé en ce que**, après que les récipients (1) ont été amenés dans la zone de transfert (2), l'élément de préhension (3, 3") rétracté décrit un mouvement radial vers le récipient (1) associé et prend ainsi ce dernier au niveau de la zone de l'ouverture ou du goulot.

7. Procédé selon l'une au moins des revendications précédentes, **caractérisé en ce que** l'élément de préhension (3, 3") qui prend le récipient associé, lors de l'amenée du récipient (1) dans la zone de transfert (2), décrit un mouvement radial vers l'axe de rotation commun (A) et libère ainsi le récipient (1), lequel n'est plus tenu que par un élément de préhension (3, 3").

8. Procédé selon l'une au moins des revendications précédentes, **caractérisé en ce que** le déroulement des mouvements décrit se fait pendant le transport des récipients (1) à travers la zone de transfert (2).

9. Procédé selon l'une au moins des revendications précédentes, **caractérisé en ce que** les mouvements des éléments de préhension (3, 3', 3") sont commandés par des disques à cames (5).

10. Procédé selon l'une au moins des revendications précédentes 1 à 9, **caractérisé en ce qu'**un élément de préhension (3") prend le récipient (1) juste au-dessus ou au-dessous du collier de support (16) tandis que l'autre l'élément de préhension (3) prend le récipient (1) au niveau du corps ou du fond.

11. Dispositif pour transporter des récipients (1) présentant un collier de support (16) ou un élément similaire, avec des éléments de préhension (3, 3', 3") qui sont associés aux récipients et qui sont fixés à des éléments de transport sans fin (18), les éléments de préhension (3, 3") étant aptes à être déplacés, au moins par tronçons, autour d'un axe de rotation commun (A) par paires dans des plans parallèles (Uu, Uo),
**caractérisé en ce que** les éléments de préhension (3, 3', 3") sont aptes à être déplacés dans le sens radial par rapport à l'axe de rotation commun (A), dans la zone d'un élément circulaire (6) ;
les éléments de préhension (3, 3") d'une paire sont superposés dans deux plans parallèles (Uu, Uo) au moins dans la zone de l'élément circulaire (6) de telle sorte qu'ils se recouvrent ou sont alignés au moins partiellement ; et
la distance axiale entre des éléments de préhension (3, 3") superposés est calculée pour que les éléments de préhension (3, 3") puissent agir au-dessus et au-dessous du collier de support (16).

12. Dispositif selon la revendication 11, **caractérisé en ce que** le déplacement radial des éléments de préhension (3, 3', 3") se fait grâce à une commande à l'aide de disques à cames (5).

13. Dispositif selon la revendication 11 ou 12, **caractérisé en ce que** les éléments de préhension (3, 3', 3") sont aptes à être commandés activement, de préférence grâce à des cames (7) ou à des actionneurs aptes à être commandés tels que des cylindres pneumatiques.

14. Dispositif selon l'une au moins des revendications 11 à 13, **caractérisé en ce que** les éléments de préhension (3, 3', 3") sont conçus pour pouvoir être actionnés passivement, de préférence grâce à une force élastique.

15. Dispositif selon l'une au moins des revendications 11 à 14, **caractérisé en ce qu'**à chaque fois, un élément de préhension (3, 3', 3") d'une paire d'éléments de préhension (3, 3") est apte à être commandé passivement, et un élément de préhension (3, 3") est apte à être commandé activement.

16. Dispositif selon l'une au moins des revendications 11 à 15, **caractérisé en ce qu'**un élément de transport sans fin est apte à être déplacé sur une trajectoire circulaire avec un rayon (R), tandis qu'un autre élément de transport sans fin (18) est également apte à être déplacé sur des tronçons rectilignes (B) et sa trajectoire ne présente le même rayon (R), par tronçons, que lors de la rotation sur un axe de rotation commun (A).

17. Dispositif selon la revendication 16, **caractérisé en ce que** des unités de traitement (8, 9, 11) se trouvent sur/dans les tronçons (B, C) de la trajectoire.

18. Dispositif selon la revendication 17, **caractérisé en ce qu'**il s'agit, pour les unités de traitement (8, 9, 11), de machines d'inspection pour le contrôle du fond, des parois latérales (9) et de l'ouverture (11), d'unités d'inscription laser (8) ou d'installations de refroidissement de récipients (17).

19. Dispositif selon la revendication 17 ou 18, **caractérisé en ce que** les unités de traitement (8, 9, 11) ont une construction modulaire, et la section de transport (T) peut être allongée ou raccourcie grâce au montage ou au démontage de modules (M) avec des unités de traitement (8, 9, 11).

20. Dispositif pour transporter des récipients (1) présentant un collier de support (16) ou un élément similaire, avec des éléments de préhension (3, 3', 3") qui sont associés aux récipients et qui sont fixés à des éléments de transport sans fin (18), selon la revendication 18 ou 19, **caractérisé en ce qu'**il s'agit, pour l'installation de refroidissement de récipients (17), d'une unité de refroidissement de fonds.

21. Dispositif selon la revendication 20, **caractérisé en ce que** l'unité de refroidissement de fonds est apte à fonctionner avec de l'air.

22. Dispositif selon la revendication 20 ou 21, **caractérisé en ce que** l'unité de refroidissement de fonds est reliée à la machine de traitement (4), de sorte qu'elle peut fonctionner avec de l'air de recyclage provenant de la machine de traitement (4).

23. Dispositif selon l'une au moins des revendications 20 à 22, **caractérisé en ce qu'**il est prévu, associé à chaque récipient (1) au moins dans l'installation de refroidissement de récipients (17), au moins un élément de refroidissement (21) qui est apte à être au moins partiellement accouplé au fond du récipient (1) et désaccouplé de celui-ci.

24. Dispositif selon la revendication 23, **caractérisé en ce que** l'élément de refroidissement (21) comprend une coque pour fond (22) qui est traversée par un réfrigérant et qui présente à peu près une forme correspondant au contour du fond du récipient (1).

25. Dispositif selon la revendication 24, **caractérisé en ce que** la coque pour fond (22) est apte à être sollicitée par le vide.

26. Dispositif selon l'une au moins des revendications 23 à 25, **caractérisé en ce que** l'élément de refroidissement (21) est apte à être sollicité par de l'azote.

27. Dispositif selon l'une au moins des revendications 23 à 26, **caractérisé en ce que** l'élément de refroidissement (21) est conçu pour pouvoir être sollicité par un réfrigérant liquide et pour que le fond, au moins, du récipient (1), puisse être plongé dans le réfrigérant.

28. Utilisation d'un dispositif selon l'une au moins des revendications 11 à 27 dans une installation pour fabriquer et/ou remplir et/ou étiqueter et/ou fermer des récipients (1).
